# FASCICULE DE BREVET EUROPEEN

(11) **EP 0 740 818 B1**
(45) Date de publication et mention de la délivrance du brevet: **07.06.2000**
(21) Numéro de dépôt: 95941152.1
(22) Date de dépôt: 28.11.1995
(51) Int. Cl.: G07F 7/08, G07F 17/32, G07D 3/00, A63F 5/00

(54) **POSTE DE CONTROLE DE JETON DE JEU**
PRÜFUNGSEINRICHTUNG FÜR SPIELCHIPS
GAMBLING CHIP AUTHENTICATION DEVICE

(30) Priorité: 29.11.1994 FR 9414425; 09.10.1995 FR 9511876
(43) Date de publication de la demande: 06.11.1996
(73) Titulaire: ETABLISSEMENTS BOURGOGNE ET GRASSET, 21420 Savigny-les-Beaune (FR)
(72) Inventeur: BOIRON, Dominique, F-21200 Beaune (FR)
(74) Mandataire: Poidatz, Emmanuel
(86) Numéro de dépôt international: FR9501568
(87) Numéro de publication internationale: WO9617329

(56) Documents cités:
- EP-A- 0 147 099
- EP-A- 0 424 355
- WO-A-88/01082
- WO-A-95/08164
- DE-A- 4 311 561
- DE-U- 29 505 951
- GB-A- 2 180 086

## Description

La présente invention concerne le contrôle des jetons de jeu également appelés jetons de casino. Par jetons de jeu, on entend tout élément en forme de disque ou de plaque utilisable en salle de jeu et représentant une valeur nominale prédéterminée ou non. D'une façon générale, les jetons sont fabriqués en matière plastique rigide et résistante aux rayures. Les jetons présentent des motifs variés en dessins et en couleurs pour réduire les risques de falsification et/ou de reproduction frauduleuse. Toutefois, la seule complexité des motifs et des couleurs (combinaison de couleurs, formes des inserts de face et/ou de tranche) s'avère insuffisante aujourd'hui pour combattre les reproductions frauduleuses.

Divers procédés d'authentification ont déjà été proposés pour les jetons de jeu. Parmi ceux-ci, les procédés optiques utilisant des encres révélables sous éclairements spécifiques (par exemple U.V.) sont onéreux et souvent peu fiables car sensibles aux modifications visuelles des jetons (salissures). De même l'authentification d'hologrammes incorporés aux jetons se fait de manière visuelle et trouve ses limites au regard de la complexité des images et du nombre souvent important des détails.

L'utilisation des codes barres a également été proposée. Elle permet d'identifier les jetons avec toutefois un niveau de sécurité assez faible compte tenu de la relative facilité de duplication d'un code barre. De plus, l'utilisation d'un code barre nécessite pour les jetons en forme de disque d'orienter le code barre par rapport au lecteur.

Les systèmes d'identification basés sur l'analyse d'enregistrement magnétique ne sont pas non plus véritablement fiables. En effet, l'encodage des pistes est maîtrisé par de nombreuses personnes. De plus, les pistes magnétiques restent fragiles, sont partiellement ou totalement démagnétisables par un aimant, et nécessitent une orientation privilégiée par rapport au lecteur pour leur lecture.

Il en résulte que les opérateurs de tables de jeu et de table de change contrôlent les jetons de manière visuelle, éventuellement à l'aide de lampe U.V., en recoupant leurs impressions par un comptage des jetons.

La vérification de la validité de jetons de prépaiement incorporant un dispositif électronique à mémoire et utilisés notamment dans des machines automatiques de vente, les machines à sous, les machines de jeux électroniques et les téléphones publics est connue de la demande EP-A-0147099. En particulier cette demande décrit une machine automatique de vente de type mixte adaptée pour recevoir dans une conduite verticale d'une part de pièces de monnaie d'autre part des jetons, plaques ou cartes de prépaiement rechargeables à débits successifs et incorporant un dispositif électronique à mémoire. Après une séparation mécanique des pièces de monnaie, le jeton de prépaiement est dirigé vers un poste de contrôle présentant des moyens de lecture/écriture sans contact dans la mémoire du jeton de prépaiement et associés à des moyens de traitement électronique pour éliminer tout jeton de prépaiement invalide (jeton non authentifié ou pour lesquels le solde du crédit disponible est nul), le jeton de prépaiement reconnu valide faisant alors en général l'objet d'une transaction électronique de vente d'un produit ou d'un service (par exemple jeu électronique ou communication téléphonique).

L'invention a pour but de proposer un système local de contrôle de jetons de table de jeu utilisable notamment en casino ou en salle de jeu pour l'authentification des jetons, fiable, rapide et discret, directement utilisable par un opérateur sur les tables de jeu, les tables de change et les tables de caisse.

L'invention propose une table selon la revendication 1. Des modes de réalisation préférés de l'invention sont définis dans les revendications dépendantes.

A cette fin, l'invention propose une table du type table de jeu, table de change ou table de caisse avec poste de contrôle de jetons de table de jeu comportant:
- une zone de contrôle de jeton,
- des moyens de recherche et de lecture sans contact d'informations contenues dans un dispositif électronique à mémoire incorporé dans le jeton de jeu présenté dans la zone de contrôle,
- des moyens de traitement électronique des informations transmises par les moyens de recherche et de lecture, lesdits moyens de traitement électroniques étant adaptés pour vérifier l'authenticité des jetons contrôlés, et
- des moyens de communication associés aux moyens de traitement électronique pour générer au moins un signal de sortie.

Les postes de contrôle pour tables de casino selon l'invention se caractérisent par un très haut degré de fiabilité car ils utilisent de l'information mémorisée électroniquement et propre à chaque jeton ou à chaque lot de jetons. Ils sont également rapides car ils permettent un traitement des informations dès leur décodage en sortie des moyens de lecture. De plus, ils restent discrets car leurs dimensions réduites leur permettent de s'intégrer facilement à une table de jeu de façon non visible, ce qui autorise un contrôle discret réalisable éventuellement à l'insu du porteur.

Selon l'invention, la transmission d'informations entre le jeton et le poste de contrôle se fait sans contact, ce qui n'impose pas un positionnement précis du jeton ou une orientation préférentielle du jeton dans la zone de contrôle. Le poste de contrôle pour tables de casino selon l'invention est bien adapté au contrôle manuel et/ou au contrôle dynamique (le jeton étant alors en mouvement). De préférence, les moyens de recherche et de lecture sont du type à couplage inductif et à ondes modulées et comportent au moins une antenne disposée au voisinage de la zone de contrôle.

Selon l'invention, le poste de contrôle est utilisable pour l'authentification immédiate des jetons. De préférence, l'authenticité d'un jeton est vérifiée par comparaison dans les moyens de traitement électronique d'au moins une partie de l'information d'identification du jeton codée dans sa mémoire avec un code de référence. Selon la définition donnée pour les champs du code d'identification mémorisé dans un jeton (par exemple dans une mémoire PROM non reprogrammable), il est possible de vérifier rapidement le numéro de série ou de lot du jeton, le nom du casino, la valeur faciale, etc., l'utilisateur final choisissant l'information à vérifier. De façon optionnelle les moyens de lecture sont adaptés pour réaliser une lecture simultanée de plusieurs jetons présentés dans la zone de contrôle.

De plus, en associant aux moyens de lecture des moyens d'écriture, éventuellement simultanée, il est possible d'utiliser des mémoires reprogrammable, par exemple du type EEPROM. Ceci permet à l'utilisateur final de personnaliser le jeton (par exemple en introduisant une date, un identifiant de table, etc.), et de suivre les jetons sensibles (notamment les jetons à haute valeur faciale).

Selon une variante de l'invention, les moyens de traitement électronique comportent une mémoire de stockage de base de données portant au moins les codes d'identification de référence des jetons répertoriés pour encore réduire le temps d'authentification des jetons. Avantageusement, la base de données est chargée par lecture directe des jetons à répertorier par les moyens de recherche et de lecture rendant ainsi le poste de contrôle complètement autonome.

A côté de l'opération de base d'authentification du jeton, les tables de jeu, de change ou de caisse avec poste de contrôle selon l'invention permettent la réalisation d'opérations de gestion sur les jetons, par exemple, comptage, saisie automatique de la valeur des jetons contrôlés, calcul de la valeur comptable d'un lot de jetons, tri des jetons, suivi des déplacements des jetons de table en table.

Selon une variante de l'invention, le poste de contrôle de table comporte des moyens de communication pour générer au moins un signal de sortie. Les signaux de sortie sont dirigés par exemple vers un afficheur visible par l'opérateur et un avertisseur sonore et/ou lumineux.

Par ailleurs, dans le cadre d'une gestion globale d'une salle de jeu, plusieurs postes de contrôle sont reliés à une unité centrale électronique éventuellement dotée d'une fonction serveur, par exemple pour fournir à chaque poste de contrôle des codes de référence particuliers destinés à l'authentification des jetons. En particulier, dans une variante de l'invention, les moyens de communication sont reliés par une interface appropriée à une unité centrale de gestion du parc des jetons pour table de jeu en circulation dans le casino ou dans une salle de jeu, les postes de contrôle réalisant les fonctions lecture et authentification des jetons et l'unité centrale de gestion réalisant les traitements informatiques de gestion des jetons et la fonction émetteur-récepteur d'informations et/ou instructions et/ou de messages en liaison avec les postes de contrôle. Cette organisation est particulièrement bien adaptée aux salles de jeu et casinos possédant un grand nombre de tables de jeu et de tables de change.

L'invention concerne également l'implantation des postes de contrôle de jetons dans les tables de jeu et/ou les tables de change. Selon une première variante d'implantation, les éléments constitutifs du poste de contrôle sont regroupés avec ou sans antenne dans un boîtier intégré au plateau de la table de jeu, de change ou de caisse.

Selon une autre variante d'implantation, l'antenne fixe est logée dans le plateau de la table de jeu, de change ou de caisse pour définir une zone de contrôle des jetons à présentation à plat.

Selon encore une autre variante d'implantation, l'antenne fixe est disposée dans un conduit vertical pour y définir une zone de contrôle des jetons à présentation verticale, le conduit débouchant par une fente pratiquée dans le plateau de la table de jeu, de change ou de caisse. Avantageusement, le conduit porte un agencement électromécanique commandé par lesdits moyens de traitement électroniques pour contrôler les déplacements des jetons dans le conduit et notamment trier les jetons non valides.

De préférence, le plateau de la table de jeu porte une fenêtre transparente permettant à l'opérateur de visualiser les signaux et/ou messages générés par lesdits moyens de communication.

Selon encore une variante des tables selon l'invention, le poste de contrôle comporte des moyens électromécaniques de tri commandés par lesdits moyens de traitement électronique pour obtenir une pluralité de sorties spécifiées par en fonction d'un paramètre associé au jeton, par exemple sa valeur numérique.

Selon encore une variante de l'invention, le poste de contrôle comporte un dispositif mécanique permettant l'introduction des jetons en vrac et leur manipulation de façon à placer les jetons un par un ou en groupe dans la zone de contrôle du poste de contrôle.

D'autres buts, avantages et caractéristiques de l'invention apparaîtront à la lecture de la description qui va suivre de plusieurs modes de réalisation d'un poste de contrôle de jeton de table de jeu pour table de jeu, de change ou de caisse selon l'invention donnés à titre d'exemples non limitatifs en référence aux dessins ci-annexés dans lesquels:
- la figure 1 montre une représentation schématique d'un poste de contrôle de jetons de table de jeu pour table de jeu, de change ou de caisse selon l'invention;
- la figure 2 représente une vue partielle en perspective d'un plateau de table de jeu selon l'invention équipé d'un poste de contrôle de jeton à présentation horizontale;
- la figure 3 représente une vue schématique en coupe du plateau de table de jeu illustrée sur la figure 2 montrant l'implantation de l'antenne fixe dans le plateau;
- la figure 4 représente une vue schématique en coupe du plateau de table de jeu illustré sur la figure 2 montrant l'implantation d'un boîtier électronique du poste de contrôle;
- la figure 5 représente une vue schématique partielle en perspective avec coupe d'un plateau de table de jeu selon l'invention équipé d'un poste de contrôle de jetons à présentation verticale;
- et la figure 6 représente une vue schématique d'un agencement électromécanique permettant de contrôler les déplacements d'un jeton dans le poste de contrôle illustré à la figure 5.

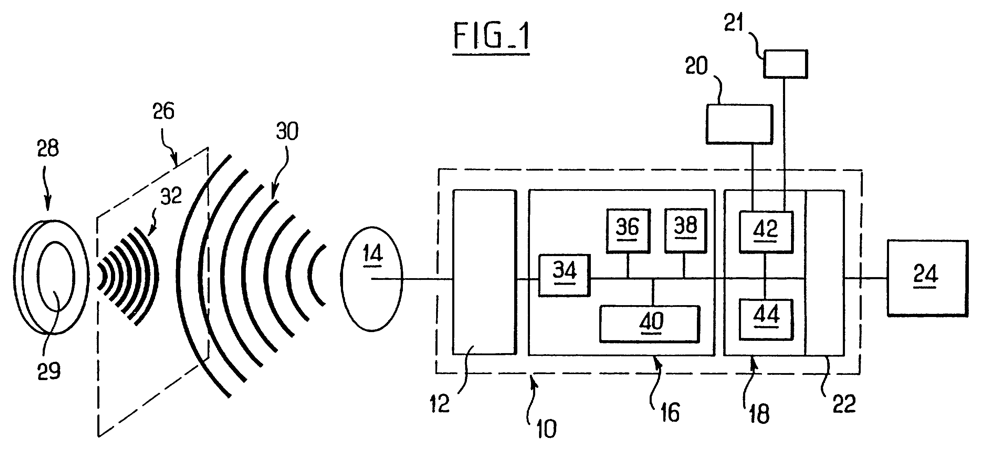

Le poste de contrôle illustré schématiquement sur la figure 1 comporte une unité électronique locale 10 (également appelée unité UEL) et présentant trois sections principales, une section analogique 12, associée à une ou plusieurs antennes 14, une section de traitement électronique numérique 16 et une section de communication 18, associée à un ou plusieurs périphériques de sortie tels qu'un afficheur visuel 20, un avertisseur sonore ou lumineux 21, etc. Avantageusement et de façon optionnelle, la section de communication 18 comporte une interface 22 de liaison série bidirectionnelle connectée à une unité centrale de gestion 24 (également appelée unité UCG).

L'unité électronique locale 10 associée à l'antenne 14 et à l'afficheur 20 est implantée dans une table de jeu, une table de change ou une table de caisse, une trieuse et tout équipement utilisé pour la gestion, la personnalisation, le tri et le comptage de jetons de table de jeu, et comportant une zone de contrôle de jeton (représentée en tirets sur la figure 1 par le cadre 26) devant laquelle est présenté un jeton de jeu 28 abritant un dispositif électronique d'identification à mémoire (par exemple donné à titre non limitatif dans la partie centrale, ou noyau 29, du jeton 28). Le poste de contrôle est destiné à authentifier des jetons de jeu incorporant un dispositif électronique d'identification dont la mémoire contient de l'information codée propre au jeton. Dans la version la plus simple, les dispositifs électroniques (non représentés) des jetons sont du type à microcircuit et équipés d'une mémoire non reprogrammable (par exemple de type PROM) avec un code d'identification unique de 32 ou 64 bits dont les champs peuvent comporter le numéro de série du jeton ou du lot de jetons, la valeur nominale et d'autres informations telles que le nom du casino, etc. Le dispositif électronique d'identification du jeton comporte également un émetteur/récepteur à antenne périphérique également implanté dans le noyau 29 et adapté pour être alimenté par couplage inductif à partir de l'antenne 14 fixe par rapport à la zone de contrôle 26. Dans cette configuration, le code d'identification du jeton ne peut faire l'objet que d'une lecture par la section analogique 12 de l'unité électronique 10.

Dans une version plus élaborée, les jetons sont à code évolutif et équipés de mémoire reprogrammable (par exemple de type EEPROM) permettant la lecture et l'écriture. Cette possibilité de modifier les informations contenues dans la mémoire augmente le degré de sécurité du jeton électronique en particulier en permettant de changer dans le temps les paramètres d'authentification. De même, il est possible de personnaliser certaines zones de la mémoire puis de les configurer de manière réversible ou non dans un mode défini de zone mémoire à accès en lecture seule ou en zones à accès en lecture/écriture. De façon optionnelle, le dialogue entre l'unité électronique et le jeton n'est autorisé qu'après une mutuelle authentification, en introduisant des codes de type mots de passe et/ou clefs de cryptographie dans le jeton et l'unité électronique (notamment pour encrypter les données durant leur transfert entre l'unité électronique et le jeton et vice versa). Le jeton peut être équipé d'un microprocesseur pour réaliser des traitements et des transactions complexes. Dans encore une autre version du microcircuit incorporé dans le dispositif électronique du jeton, le microcircuit est adapté pour permettre la lecture et/ou l'écriture simultanée de plusieurs jetons, permettant entre autres de travailler sur les jetons ou plaques de jeu empilés. Outre le gain de temps, il est ainsi possible de faire des comptages directs des mises en jeu sur les tables, des inventaires de jetons et/ou des lectures/écritures multiples, par exemples lors des personnalisations des jetons.

La section analogique 12 intègre les moyens de recherche et de lecture d'information contenue dans le dispositif électronique à mémoire du jeton 28 présenté dans la zone de contrôle 26. Pour ce faire, la section analogique 12 comporte un générateur d'ondes associé à l'antenne 14 fixe par rapport à la zone de contrôle 26 pour rayonner un champ magnétique RF 30 (entre 10 kHz et 20 MHz) dans la zone de contrôle 26. La section analogique 12 comporte également des circuits de réception activés en mode de recherche permanente ou scrutation pour détecter la présence d'ondes modulées 32 en provenance du jeton 28. Les signaux venant du jeton 28 sont démodulés dans un circuit démodulateur pour être transmis à l'entrée d'un convertisseur Analogique/Numérique 34 qui forme le circuit d'entrée de la section de traitement électronique de type numérique 16. En cas d'absence de circuit électronique dans le jeton, ou de défaillance du circuit, la section analogique 12 ne reçoit aucun signal exploitable, ce qui se traduit par une absence de signal à l'entrée du convertisseur Analogique/Numérique 34. Il est à noter que le dispositif électronique à mémoire du jeton 28 est alimenté électriquement par couplage inductif entre les deux antennes à partir du rayonnement RF émis par l'antenne fixe 14. Par ailleurs, dans une autre version adaptée au mode lecture/écriture, la section analogique 12 comporte de plus des moyens d'écriture dans le circuit à mémoire du jeton en particulier un circuit modulateur des ondes émises par l'antenne fixe 14. Sans sortir du cadre de l'invention, une pluralité d'antennes peuvent être associées à la zone de contrôle 26 et connectées à la section analogique 12 de façon par exemple à augmenter la vitesse et le débit des transmissions d'informations entre le jeton et le poste de contrôle. A titre d'exemple non limitatif une variante de l'invention (non représentée) comporte une antenne pour la lecture et une antenne pour l'écriture.

L'unité de traitement électronique numérique 16 intègre les moyens de traitement électronique des informations transmises par les moyens de recherche et de lecture 12 des informations contenues dans la mémoire incorporée dans le jeton de jeu 28 présenté dans la zone de contrôle 26, et comporte outre le convertisseur Analogique/Numérique 34 (et un éventuel convertisseur Numérique/Analogique en cas de fonction écriture dans la mémoire du jeton), un microprocesseur 36 (à titre d'exemple non limitatif un microprocesseur à 8 bits), une mémoire EEPROM 38 de configuration du système de 32 Ko et une mémoire vive RAM 40 de 32 Ko destinée à recevoir une base de données. La base de données réactualisable peut contenir 2 000 identités (codes de référence) de jetons répertoriés (ou de lots de jetons) respectivement associées à un code de valeur nominale (avec 2 caractères pour l'unité de compte et 7 caractères numériques). En mode d'authentification, le microprocesseur 36 réalise le décodage du signal numérique en sortie du convertisseur 34 pour obtenir un code d'authentification du jeton (n° d'identité du jeton) et procède à une comparaison avec les codes de référence présents dans la mémoire 40. Si le numéro appartient à la base de données stockée dans la mémoire 40, l'avertisseur 21 est activé (bip ou éclat lumineux) par un signal de sortie des moyens de communication 18 et un message "VALIDE" apparaît sur l'écran de l'afficheur 20. Le microprocesseur 36 commande également l'affichage sur l'écran de l'afficheur 20 soit la valeur théorique du jeton identifié obtenue à partir de la base de données (pour vérification par l'opérateur de la valeur faciale inscrite sur le jeton), soit la valeur lue à partir de la mémoire du jeton. Par contre, en cas d'absence soit de signal lisible venant du jeton soit de numéro d'identification dans la base de donnée, le message "INVALIDE" apparaît sur l'afficheur 20.

De façon optionnelle, le microprocesseur 36 peut procéder à des traitements informatiques plus élaborés comme le comptage des jetons et la détermination de la valeur comptable d'un groupe de jetons contrôlés, la comptabilité en général et des statistiques, les résultats de ces opérations étant susceptibles d'être affichés à l'afficheur 20 et/ou transmis à l'unité centrale de gestion 24. Enfin, le microprocesseur 36 gère les circuits et composants de la section analogique 12 et de la section de communication 18.

Outre l'interface 22 qui peut être du type RS232 ou RS485, la section de communication 18 comporte des circuits générateurs 42 des signaux de sortie vers l'avertisseur 21 et l'afficheur 20, une capacité de sauvegarde et un ensemble horloge/dateur 44 utilisé notamment pour dater (en date et en heure) un événement concernant le jeton (par exemple la présence sur une table donnée d'un jeton déterminé). Enfin, l'unité électronique locale 10 comporte une alimentation externe 220 V/50 Hz et une batterie rechargeable pour la sauvegarde des données dans la mémoire RAM 40. Sans sortir du cadre de l'invention, les signaux de sortie peuvent être générés directement par l'interface 22 vers l'unité UCG ou même se présenter sous la forme de signaux d'écriture dans la mémoire du jeton, les moyens de communication étant constitués alors par les moyens d'écriture associés aux moyens de lecture.

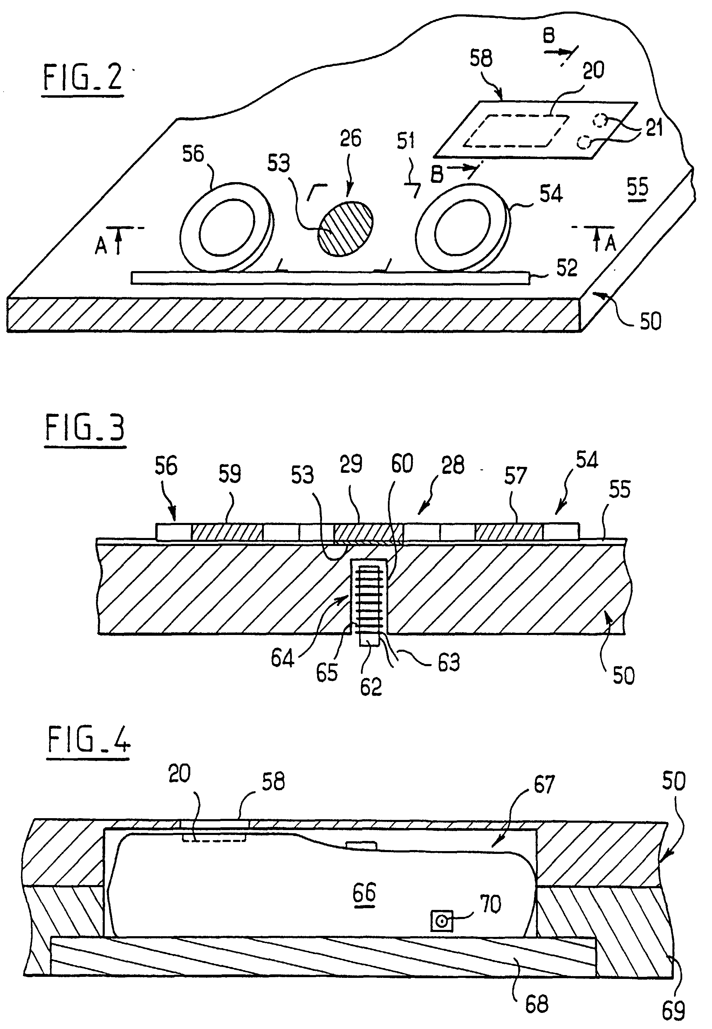

Grâce à la mémoire de configuration 38, l'unité électronique locale 10 est capable d'opérer de façon autonome. Comme expliqué ci-après, l'unité électronique locale UEL 10 (avec ses trois sections 12, 16, et 18), l'afficheur 20 et l'avertisseur sonore 21 peuvent être intégrés dans un boîtier de dimensions modestes (150 x 80 x 4 mm), lui-même facilement intégré dans le plateau d'une table de jeu ou de change (voir le boîtier 66 de la figure 4).

Bien entendu, chaque poste de contrôle par son unité UEL 10 peut être relié soit directement soit par un réseau à l'unité centrale de gestion 24 qui est susceptible de faire fonction de serveur, chaque unité UEL, donc chaque table équipée d'un poste de contrôle, étant identifiée par son numéro de table. Il est ainsi possible de réaliser la gestion en temps réel de toutes les tables d'une même salle de jeu ou du casino, de transmettre des informations et/ou messages et/ou instructions à chaque unité UEL par exemple en cas de vol ou de retrait d'un jeton, etc. . De même, la présence du circuit d'horloge/dateur 44 dans chaque unité UEL permet le suivi en temps réel des déplacements de certains jetons sensibles dans l'enceinte du casino (jetons volés ou jetons de grande valeur).

Il est à noter l'intérêt de la présence de la base de données dans la mémoire RAM 40 de l'unité UEL permettant un traitement très rapide en temps réel de la vérification et de l'authentification du jeton, étant entendu que certaines opérations de gestion peuvent être réalisées ultérieurement dans l'unité UEL 10 et/ou dans l'unité UCG 24. Dans ce dernier cas, l'unité UCG 24 interroge les unités UEL à intervalles réguliers et récupère les informations stockées dans une zone mémoire tampon de la mémoire 40 de chaque unité UEL. Cette solution par rapport à un système où la base de données est totalement regroupée dans l'unité UCG a l'avantage de simplifier et de diminuer considérablement les transferts d'information entre une unité UEL et l'unité UCG, de limiter le rôle de l'unité électronique locale 10 à l'acquisition des données et aux opérations d'authentification, les opérations de gestion étant déportées au niveau de l'unité UCG. Il en résulte un gain de temps pour l'authentification appréciable.

La base de données 40 peut être créée directement à partir de l'unité UEL (en mode création/mise à jour) en lisant les identités (les valeurs, et autres données personnalisées) des jetons à répertorier. En variante, la base de données peut être créée directement dans l'unité UCG 24 et chargée en tout ou partie dans la mémoire 40 à partir de l'unité UCG 24. Enfin, la base de données dans la mémoire 40 peut être créée et mise à jour de façon mixte avec des entrées à partir de l'unité UEL 10 et de l'unité UCG 24. Bien entendu, selon la capacité mémoire du jeton, il est possible au jeton de véhiculer toutes les informations qui lui sont relatives, par exemple valeur numérique, nom du casino, etc. Dans ce cas, il n'est plus nécessaire de rattacher d'autres informations à l'identité du jeton dans la base de donnée centrale de l'unité UCG. L'unité UEL est alors capable de fonctionner de façon totalement autonome, la base de données locale nécessaire à l'identification des jetons étant créée par lecture directe de ces derniers. Dans le cas de jetons dont la mémoire est adaptée pour la lecture et l'écriture, cette dernière fonction est réalisée par le poste de contrôle UEL soit de façon autonome soit à partir d'instructions ou d'information venant de l'unité UCG. En particulier le poste de contrôle peut être utilisé pour personnaliser les jetons.

Les figures 2, 3 et 4 concernent un premier mode d'implantation du poste de contrôle décrit ci-avant en référence à la figure 1 dans le plateau d'une table de jeu, d'une table de change ou d'une table de caisse selon l'invention, mode d'implantation selon lequel le jeton à contrôler est présenté à plat parallèlement au plateau de la table.

La figure 2 représente une vue partielle en perspective du dessus d'une table de jeu dont le plateau 50 est équipé d'un tapis 55. Tel que représenté sur la figure 2, le tapis 55 porte un marquage de coin 51 délimitant la zone de contrôle 26 des jetons et un marquage central 53 (disque hachuré) indiquant à l'opérateur la position de l'antenne fixe (visible sur la figure 3 sous la référence 64) dans le plateau 50. Les jetons 54 et 56 sont déplacés à plat, mis en position dans la zone 26 pour être lus et identifiés. Une règle 52 fixée au plateau 50 aide l'opérateur à positionner les jetons. Le plateau 50 comporte une petite fenêtre 58 en matériau transparent (verre ou matière plastique) permettant à l'opérateur de voir l'avertisseur 21, par exemple une lampe, et l'écran afficheur 20 associés à l'unité locale électronique 10 (non visible sur les figures 3 et 4 car intégrée dans un boîtier 66 lui-même logé dans le plateau 50, voir figure 4).

La figure 3 représente une vue en coupe du plateau 50 selon la ligne AA de la figure 2 sensiblement au niveau du disque hachuré 53 (le jeton 28 ayant été replacé entre les jetons 54 et 56). Centré sur le disque hachuré 53, un évidement cylindrique 60 est pratiqué dans le plateau 50 perpendiculairement à celui-ci jusqu'à environ 0,5 cm du tapis 55. Comme illustré sur la figure 3, l'évidement 60 reçoit l'antenne fixe 64 (de 6 mm de diamètre) se présentant sous la forme d'un enroulement 65 de fil de cuivre autour d'un bâton cylindrique de ferrite 62 d'environ 2 cm de long, les spires de l'antenne 64 s'étendant sensiblement parallèlement au plateau 50. Dans la pratique, la profondeur de l'évidement est définie en fonction des matériaux utilisés pour le plateau 50 d'une part et en fonction de la puissance rayonnée par l'antenne 64 d'autre part, pour obtenir une zone de contrôle suffisante. Dans le cas où il est nécessaire de bien circonscrire la zone de contrôle pour éviter les interférences entre plusieurs jetons, une ferrite supplémentaire (non représentée) est placée autour de l'antenne pour confiner le champ électromagnétique rayonné par celle-ci.

Comme illustré sur la figure 4 (montrant une coupe du plateau 50 selon la ligne BB de la figure 2), l'unité électronique locale (unité UEL 10 décrite ci-avant en relation à la figure 1) est placée dans son boîtier 66 sous le plateau 50 dans un logement 67 prévu à cet effet dans le plateau 50 et un faux plateau 69 et fermé par un fond amovible 68, l'afficheur 20 et les avertisseurs étant disposés en regard de la fenêtre transparente 58. Le boîtier 66 présente une sortie de prise d'antenne 70 convenablement reliée à la section analogique 12 et à la ligne d'antenne 63 (voir figure 3) et une sortie série (non visible) destinée à être connectée à l'unité centrale de gestion 24. Il est à remarquer que l'implantation du poste de contrôle dans la table de jeu est bien dissimulée, difficilement perceptible des joueurs, ce qui permet un contrôle discret des jetons. Par ailleurs sans sortir du cadre de l'invention l'antenne peut être intégrée au boîtier, le boîtier étant alors disposé dans le plateau de la table de jeu de façon appropriée par rapport à la zone de contrôle choisie.

Telle que représentée sur la figure 3, l'antenne 64 a été développée avec des dimensions réduites pour générer un champ RF très directif sur une hauteur de 2 cm environ adapté au contrôle sélectif un par un de jetons éventuellement accolés 54, 28, 56 d'environ 40 mm de diamètre et abritant un circuit électronique d'identification (non visible) dans leur partie centrale hachurée 57, 29, 59.

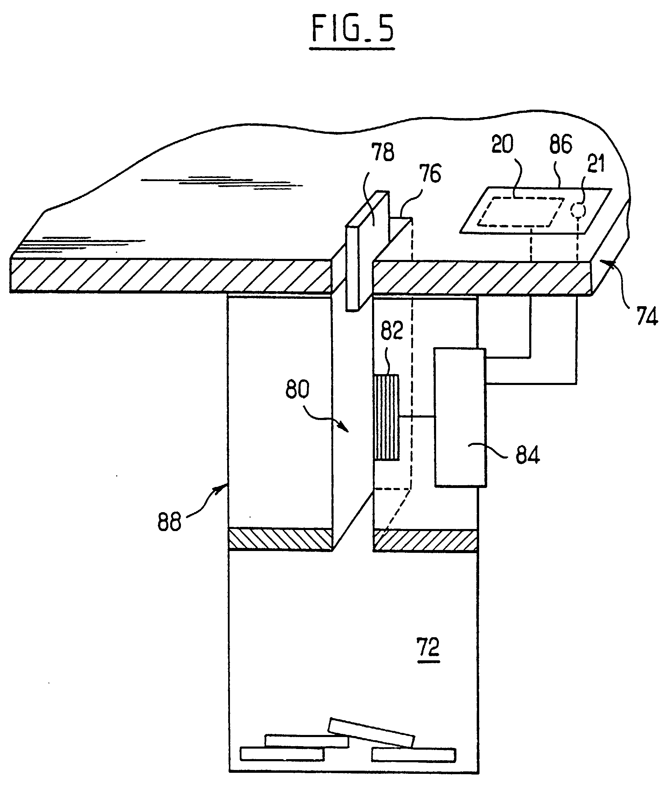

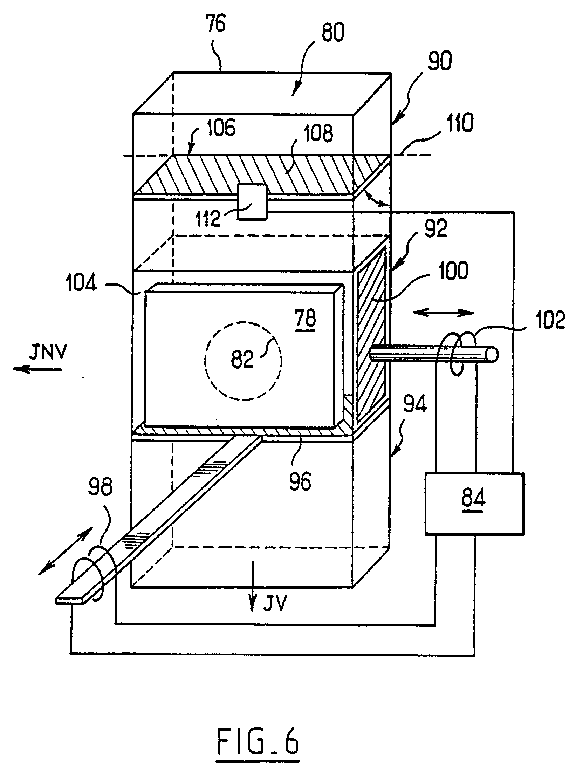

Les figures 5 et 6 concernent un autre mode d'implantation du poste de contrôle de jeton de table de jeu dans lequel les jetons sont présentés perpendiculairement à la table de jeu. Si l'on considère la figure 5, une caisse (ou boîte) à jetons ou à plaques 72 est disposée sous le plateau 74 d'une table de jeu. Le plateau 74 est pourvu d'une fente 76 dans laquelle est introduite une plaque de jeu 78 elle-même pourvue d'un dispositif électronique d'identification à mémoire (non représenté). La fente 76 est reliée à la caisse à jetons 72 par un conduit vertical 80 dont une des parois porte l'antenne fixe 82 connectée à l'unité électronique locale 84 (incorporant une unité UEL 10 décrite ci-avant en relation avec la figure 1). L'antenne 82 (à spires parallèles au conduit 80) présente un diamètre de l'ordre de 40 à 50 mm pour permettre la lecture des jetons et des plaques en dynamique pendant leur mouvement de descente par gravité, le conduit vertical 80 ayant pour fonction de canaliser la plaque 78 (ou le jeton) pendant sa chute pour que la plaque reste parallèle à l'antenne 82 lors de son passage devant cette dernière. De plus, l'antenne 82 est placée dans une zone de contrôle suffisamment éloignée du plateau 74 de la table pour éviter qu'un jeton introduit dans la fente 76 mais non lâché par l'opérateur puisse être lu puis retiré. Dans la pratique, l'antenne 82, le conduit 80 et le boîtier de l'unité locale électronique 84 sont regroupés dans un support 88 sur lequel est fixée la caisse à jeton 72, le support 88 étant lui-même fixé au plateau 74 sous la fente 76.

Le poste de contrôle qui vient d'être décrit en référence à la figure 5 peut être utilisé pour faire du comptage de jetons ou de façon plus intéressante pour comptabiliser la valeur numérique totale des jetons et des plaques dans la caisse 72, la présence d'éventuels jetons non valides (donc non comptabilisés) étant signalée à l'afficheur. Dans une première variante (non représentée), le support 88 intègre des moyens électromécaniques commandés par l'unité UEL 84 pour contrôler la chute du jeton et notamment la durée pendant laquelle le jeton reste dans la zone de contrôle c'est-à-dire dans le champ de travail de l'antenne fixe 82.

La figure 6 illustre le schéma de principe d'un agencement électromécanique commandé par l'unité UEL 84 adapté pour être intégré au poste de contrôle de la figure 5 et susceptible de trier les jetons non valides (y compris les jetons sans dispositif électronique). L'agencement décrit ci-après est donné à titre d'exemple non limitatif.

Si l'on considère la figure 6, le conduit 80 est divisé en trois tronçons superposés. Un tronçon supérieur 90 directement placé sous la fente 76, un tronçon intermédiaire 92 correspondant à la zone de contrôle en face duquel est placée l'antenne fixe 82, et un tronçon inférieur 94 débouchant dans la caisse à jetons (non représentée). Entre les tronçons 92 et 94, est placé un petit panneau 96 horizontal mobile en translation perpendiculairement à l'antenne 82 par l'intermédiaire d'une commande électromécanique 98 contrôlé par l'unité UEL 84. Le panneau 96 reste fermé pendant le temps de contrôle du jeton et est susceptible d'être commandé en position d'ouverture par l'unité UEL 84 après authentification du jeton et réalisation des traitements électroniques et/ou des opérations de lecture/écriture, le jeton (ou la plaque) valide tombant alors par gravité dans la caisse à jetons (flèche JV). Dans le tronçon intermédiaire 92 est prévu un poussoir latéral vertical 100 mobile en translation parallèlement à l'antenne 82 par l'intermédiaire d'une commande électromécanique 102 également contrôlée par l'unité UEL 84. En cas de détection d'un jeton non valide, le poussoir 100 est déplacé vers l'intérieur du conduit 80 pour éjecter le jeton (flèche JNV) au travers d'une fenêtre de rebut 104 ouvrant dans le conduit 80 en face du poussoir 100. Pour éviter la présence dans la zone de contrôle 92 de plusieurs jetons, le tronçon supérieur 90 est équipé d'une porte rabattante verrouillable 106. La porte 106 comporte un panneau pivotant 108 selon un axe horizontal 110 monté sur le conduit 80 et sollicité en position horizontale fermée par un ressort (non représenté). De plus, le panneau 108 peut être maintenu en position fermée par un verrou 112 électrocommandé par l'unité UEL 84 aussi longtemps que le jeton ou la plaque 78 n'a pas été sorti de la zone de contrôle 92 par mouvement du panneau 96 ou du poussoir 100. Par rapport à l'unité UEL 10, l'unité UEL 84 comporte des circuits de contrôle (non représentés) pilotés par le microprocesseur 36 des commandes électromagnétiques 98 et 102 et du verrou électrocommandé 112.

Sans sortir du cadre de l'invention, l'agencement de tri peut être modifié pour obtenir une pluralité de sorties spécifiées en fonction d'un paramètre associé au jeton par exemple sa valeur numérique. Cette application est particulièrement intéressante pour les trieuses équipant les tables de jeu, notamment les tables de roulette. De même l'agencement de tri ou le poste de contrôle lui même peut être associé à un dispositif mécanique (non représenté) permettant l'introduction des jetons en vrac et leur manipulation mécanique de façon à les placer un par un ou en groupe dans la zone de contrôle du poste de lecture/écriture.

## Revendications

1. Table du type table de jeu, table de change ou table de caisse, avec poste de contrôle de jetons de table de jeu comportant une zone de contrôle de jeton (26), des moyens de recherche et de lecture sans contact (12, 14) d'informations contenues dans un dispositif électronique à mémoire incorporé dans un jeton de jeu (28) présenté dans la zone de contrôle (26), des moyens de traitement électronique (16) des informations transmises par les moyens de recherche et de lecture (12, 14), lesdits moyens de traitement électronique (16) étant adaptés pour vérifier l'authenticité des jetons contrôlés, et des moyens de communication (18) associés aux moyens de traitement électronique pour générer au moins un signal de sortie.

2. Table de jeu, de change ou de caisse selon la revendication 1, caractérisée en ce que lesdits moyens de recherche et de lecture sont du type à couplage inductif et à ondes modulées et comportent au moins une antenne (14, 64, 82) disposée au voisinage de la zone de contrôle (26, 53,92).

3. Table de jeu, de change ou de caisse selon l'une des revendications 1 et 2, caractérisée en ce que lesdits moyens de lecture sont adaptés pour réaliser une lecture simultanée de plusieurs jetons présentés dans la zone de contrôle.

4. Table de jeu, de change ou de caisse selon l'une des revendications 1 à 3, caractérisée en ce qu'auxdits moyens de lecture (12) sont associés des moyens permettant l'écriture, éventuellement simultanée, dans ledit dispositif électronique à mémoire de chaque jeton présenté dans la zone de contrôle.

5. Table de jeu, de change ou de caisse selon l'une des revendications précédentes, caractérisée en ce que l'authenticité d'un jeton est vérifiée par comparaison dans les moyens de traitement électronique (16) d'au moins une partie de l'information d'identification codée en mémoire du jeton avec un code de référence.

6. Table de jeu, de change ou de caisse selon la revendication 5, caractérisée en ce que lesdits moyens de traitement électronique (16) comportent une mémoire de stockage (40) d'une base de données portant au moins les codes d'identification de référence des jetons répertoriés.

7. Table de jeu, de change ou de caisse selon la revendication 6, caractérisée en ce que ladite base de données est chargée par lecture directe des jetons à répertorier par lesdits moyens de recherche et de lecture (12, 14).

8. Table de jeu, de change ou de caisse selon l'une des revendications précédentes, caractérisée en ce que lesdits moyens de communication (18) sont associés à un afficheur (20) et au moins un avertisseur (21).

9. Table de jeu, de change ou de caisse selon l'une des revendications précédentes, caractérisée en ce que lesdits moyens de communication (18) sont reliés par une interface appropriée (22) à une unité centrale de gestion (24) d'un parc de jetons pour table de jeu, le poste de contrôle (10) de table réalisant les fonctions de lecture et d'authentification des jetons et l'unité centrale de gestion (24) réalisant les traitements informatiques de gestion des jetons et la fonction d'émetteur-récepteur d'informations et/ou d'instructions et/ou de messages en liaison avec ledit poste de contrôle (10).

10. Table de jeu, de change ou de caisse selon l'une des revendications 2 à 9, caractérisée en ce que lesdits moyens de recherche et de lecture (12), lesdits moyens de traitement électronique (16) et lesdits moyens de communication (18) sont regroupés, avec ou sans antenne, dans un boîtier (66) intégré au plateau (50) de ladite table de jeu, de change ou de caisse.

11. Table de jeu, de change ou de caisse selon l'une des revendications 2 à 9, caractérisée en ce que l'antenne (64) est logée dans le plateau (50) de ladite table de jeu, de change ou de caisse pour y définir une zone de contrôle (53) des jetons à présentation à plat.

12. Table de jeu, de change ou de caisse selon l'une des revendications 2 à 9, caractérisée en ce que l'antenne (82) est disposée dans un conduit vertical (80) pour y définir une zone de contrôle des jetons à présentation verticale, le conduit (80) débouchant par une fente (76) pratiquée dans le plateau (74) de ladite table de jeu, de change ou de caisse.

13. Table de jeu, de change ou de caisse selon la revendication 12, caractérisée en ce que le conduit (80) débouche dans une caisse ou boîte à jetons (72) de ladite table de jeu, de change ou de caisse.

14. Table de jeu, de change ou de caisse selon l'une des revendications 12 et 13, caractérisée en ce que le conduit (80) porte un agencement électromécanique (96, 98, 100, 102) commandé par lesdits moyens de traitement électronique (16, 84) pour contrôler les déplacements des jetons dans le conduit (80) et notamment pour trier les jetons non valides.

15. Table de jeu, de change ou de caisse selon l'une des revendications précédentes, caractérisée en ce que le plateau (50, 74) de ladite table de jeu, de change ou de caisse porte une fenêtre transparente (58, 86) permettant à l'opérateur de visualiser les signaux et/ou messages générés par lesdits moyens de communication (18).

16. Table de jeu, de change ou de caisse selon l'une des revendications précédentes, caractérisée en ce que ledit poste de contrôle comporte des moyens d'horloge et de dateur (44).

17. Table de jeu, de change ou de caisse selon l'une des revendications précédentes, caractérisée en ce que ledit poste de contrôle comporte des moyens électromécaniques de tri commandés par lesdits moyens de traitement électronique pour obtenir une pluralité de sorties spécifiées en fonction d'un paramètre associé au jeton, par exemple sa valeur numérique.

18. Table de jeu, de change ou de caisse selon l'une des revendications 1 à 16, caractérisée en ce que ledit poste de contrôle est utilisé pour la gestion, la personnalisation, le tri ou le comptage de jetons de table de jeu, la saisie automatique de la valeur des jetons contrôlés, le calcul de la valeur comptable d'un lot de jetons ou le suivi des déplacements des jetons de table en table.

19. Table de jeu, de change ou de caisse selon l'une des revendications précédentes, caractérisée en ce ledit poste de contrôle comporte un dispositif mécanique permettant l'introduction des jetons en vrac et leur manipulation mécanique de façon à placer les jetons un par un ou en groupe dans la zone de contrôle du poste de contrôle.

## Patentansprüche

1. Tisch von der Art eines Spieltischs, Wechseltischs oder Kassentischs, mit einer Prüfeinrichtung für Spieltisch-Spielmarken mit einem Spielmarkenprüfbereich (26), Mitteln zur Untersuchung und zum berührungslosen Lesen (12, 14) von Informationen, die in einer elektronischen Speichereinrichtung enthalten sind, die in eine Spielmarke (28) integriert ist, die in den Prüfbereich (26) gehalten wird, elektronischen Verarbeitungsmitteln (16) für Informationen, die von den Untersuchungs- und Lesemitteln (12, 14) übertragen werden, wobei die elektronischen Verarbeitungsmittel (16) dafür geeignet sind, die Echtheit der geprüften Spielmarken zu verifizieren, und Kommunikationsmitteln (18), die mit den elektronischen Verarbeitungsmitteln verbunden sind, zum Erzeugen mindestens eines Ausgangssignals.

2. Spiel-, Wechsel- oder Kassentisch nach Anspruch 1, dadurch gekennzeichnet, daß die Untersuchungs- und Lesemittel von der Art mit induktiver Kopplung und mit modulierten Wellen sind und mindestens eine Antenne (14, 64, 82) aufweisen, die in der Nachbarschaft des Prüfbereichs (26, 53, 92) angeordnet ist.

3. Spiel-, Wechsel- oder Kassentisch nach einem der Ansprüche 1 und 2, dadurch gekennzeichnet, daß die Lesemittel dafür geeignet sind, ein gleichzeitiges Lesen mehrerer in den Prüfbereich gehaltener Spielmarken durchzuführen.

4. Spiel-, Wechsel- oder Kassentisch nach einem der Ansprüche 1 bis 3, dadurch gekennzeichnet, daß die Lesemittel (12) mit Mitteln verbunden sind, die das - gegebenenfalls gleichzeitige - Schreiben in die elektronische Speichereinrichtung jeder in den Prüfbereich gehaltenen Spielmarke ermöglichen.

5. Spiel-, Wechsel- oder Kassentisch nach einem der vorhergehenden Ansprüche, dadurch gekennzeichnet, daß in den elektronischen Verarbeitungsmitteln (16) die Echtheit einer Spielmarke durch Vergleich mindestens eines Teils der im Speicher der Spielmarke kodierten Identifikationsinformation mit einem Referenzkode verifiziert wird.

6. Spiel-, Wechsel- oder Kassentisch nach Anspruch 5, dadurch gekennzeichnet, daß die elektronischen Verarbeitungsmittel (16) einen Speicher zum Speichern (40) einer Datenbank aufweisen, die mindestens die Referenzidentifikationskodes der registrierten Spielmarken enthält.

7. Spiel-, Wechsel- oder Kassentisch nach Anspruch 6, dadurch gekennzeichnet, daß die Datenbank durch direktes Lesen der zu registrierenden Spielmarken durch die Untersuchungs- und Lesemittel (12, 14) gefüllt wird.

8. Spiel-, Wechsel- oder Kassentisch nach einem der vorhergehenden Ansprüche, dadurch gekennzeichnet, daß die Kommunikationsmittel (18) mit einer Anzeigeeinrichtung (20) und mindestens einer Warneinrichtung (21) verbunden sind.

9. Spiel-, Wechsel- oder Kassentisch nach einem der vorhergehenden Ansprüche, dadurch gekennzeichnet, daß die Kommunikationsmittel (18) über eine geeignete Schnittstelle (22) mit einer Zentraleinheit zur Verwaltung (24) eines Bestandes von Spieltisch-Spielmarken verbunden sind, wobei die Tischprüfeinrichtung (10) die Funktionen des Lesens und der Echtheitsprüfung der Spielmarken wahrnimmt, und die Verwaltungszentraleinheit (24) die Informationsverarbeitung zur Verwaltung der Spielmarken und die Sender/Empfängerfunktion für Informationen und/oder Anweisungen und/oder Meldungen in Verbindung mit der Prüfeinrichtung (10) wahrnimmt.

10. Spiel-, Wechsel- oder Kassentisch nach einem der Ansprüche 2 bis 9, dadurch gekennzeichnet, daß die Untersuchungs- und Lesemittel (12), die elektronischen Verarbeitungsmittel (16) und die Kommunikationsmittel (18) mit oder ohne Antenne in einem Gehäuse (66) gruppiert sind, das in der Platte (50) des Spiel-, Wechsel- oder Kassentischs integriert ist.

11. Spiel-, Wechsel- oder Kassentisch nach einem der Ansprüche 2 bis 9, dadurch gekennzeichnet, daß die Antenne (64) in der Platte (50) des Spiel-, Wechsel- oder Kassentischs untergebracht ist, um dort einen Prüfbereich (53) für flach hingehaltene Spielmarken festzulegen.

12. Spiel-, Wechsel- oder Kassentisch nach einem der Ansprüche 2 bis 9, dadurch gekennzeichnet, daß die Antenne (82) in einem vertikalen Kanal (80) angeordnet ist, um dort einen Prüfbereich für vertikal hingehaltene Spielmarken zu definieren, wobei der Kanal (80) in einen Schlitz (76) mündet, der in der Platte (74) des Spiel-, Wechsel- oder Kassentischs angebracht ist.

13. Spiel-, Wechsel- oder Kassentisch nach Anspruch 12, dadurch gekennzeichnet, daß der Kanal (80) in einer Kasse oder einem Spielmarkenbehälter (72) des Spiel-, Wechsel- oder Kassentischs mündet.

14. Spiel-, Wechsel- oder Kassentisch nach einem der Ansprüche 12 und 13, dadurch gekennzeichnet, daß der Kanal (80) eine elektromechanische Anordnung (96, 98, 100, 102) trägt, die von den elektronischen Verarbeitungsmitteln (16, 84) angesteuert wird, um die Verschiebungen der Spielmarken in dem Kanal (80) zu kontrollieren und insbesondere um die ungültigen Spielmarken auszusortieren.

15. Spiel-, Wechsel- oder Kassentisch nach einem der vorhergehenden Ansprüche, dadurch gekennzeichnet, daß die Platte (50, 74) des Spiel-, Wechsel- oder Kassentischs ein transparentes Fenster (58, 86) trägt, das es dem Operator ermöglicht, die Signale und/oder Meldungen, die von den Kommunikationsmitteln (18) erzeugt werden, optisch wahrzunehmen.

16. Spiel-, Wechsel- oder Kassentisch nach einem der vorhergehenden Ansprüche, dadurch gekennzeichnet, daß die Prüfeinrichtung Uhrzeit- und Datumsangabemittel (44) aufweist.

17. Spiel-, Wechsel- oder Kassentisch nach einem der vorhergehenden Ansprüche, dadurch gekennzeichnet, daß die Prüfeinrichtung elektromechanische Mittel zur Sortierung aufweist, die durch die elektronischen Verarbeitungsmittel angesteuert werden, um eine Mehrzahl von spezifischen Ausgängen in Abhängigkeit von einem mit der Spielmarke verknüpften Parameter, beispielsweise seinem numerischen Wert, zu erhalten.

18. Spiel-, Wechsel- oder Kassentisch nach einem der Ansprüche 1 bis 16, dadurch gekennzeichnet, daß die Prüfeinrichtung zur Verwaltung, zur Zuordnung zu einer Person, zur Sortierung oder Zählung von Spieltisch-Spielmarken, zur automatischen Erfassung des Wertes der geprüften Spielmarken, zur Berechnung des Buchungswertes eines Postens Spielmarken oder zur Erfassung der Verschiebungen der Spieltisch-Spielmarken im Tisch verwendet wird.

19. Spiel-, Wechsel- oder Kassentisch nach einem der vorhergehenden Ansprüche, dadurch gekennzeichnet, daß die Prüfeinrichtung eine mechanische Vorrichtung aufweist, die das lose Einführen der Spielmarken und ihre mechanische Handhabung erlaubt, so daß die Spielmarken eine nach der anderen oder gruppenweise in dem Prüfbereich der Prüfeinrichtung plaziert werden können.

## Claims

1. Gambling table, change desk or cash-in desk, with a gambling-table chip checking station comprising a chip checking area (26), means (12, 14) for searching for and reading information, without contact, contained in an electronic memory device incorporated into a gambling chip (28) presented in the checking area (26), means (16) for electronically processing the information transferred by the search and read means (12, 14), the said electronic processing means (16) being designed to verify the authenticity of the chips checked, and communication means (18) associated with the electronic processing means in order to generate at least one output signal.

2. Gambling table, change desk or cash-in desk according to Claim 1, characterized in that the said search and read means are of the modulated-wave and inductive coupling type and include at least one antenna (14, 64, 82) arranged in the vicinity of the checking area (26, 53, 92).

3. Gambling table, change desk or cash-in desk according to either of Claims 1 and 2, characterized in that the said read means are designed to carry out simultaneous reading of several chips presented in the checking area.

4. Gambling table, change desk or cash-in desk according to one of Claims 1 to 3, characterized in that associated with the said read means (12) are means which allow writing, possibly simultaneous, into the said electronic memory device of each chip present in the checking area.

5. Gambling table, change desk or cash-in desk according to one of the preceding claims, characterized in that the authenticity of a chip is verified by comparing in the electronic processing means (16) at least part of the chip identification information encoded in its memory with a reference code.

6. Gambling table, change desk or cash-in desk according to Claim 5, characterized in that the said electronic processing means (16) include a memory (40) for storing a database carrying at least the reference identification codes of the catalogued chips.

7. Gambling table, change desk or cash-in desk according to Claim 6, characterized in that the said database is loaded by direct reading of the chips to be catalogued by the said search and read means (12, 14).

8. Gambling table, change desk or cash-in desk according to one of the preceding claims, characterized in that the said communication means (18) are associated with a display unit (20) and at least one warning device (21).

9. Gambling table, change desk or cash-in desk according to one of the preceding claims, characterized in that the said communication means (18) are connected via an appropriate interface (22) to a central unit (24) for managing a complete set of chips for a gambling table, the table checking station (10) carrying out the chip read and authentication functions and the central management unit (24) carrying out the chip management data processing and the function of transmitting and receiving the information and/or instructions and/or messages in connection with the said checking station (10) .

10. Gambling table, change desk or cash-in desk according to one of Claims 2 to 9, characterized in that the said search and read means (12), the said electronic processing means (16) and the said communication means (18) are combined, with or without an antenna, in a box (66) built into the top (50) of the said gambling table, change desk or cash-in desk.

11. Gambling table, change desk or cash-in desk according to one of Claims 2 to 9, characterized in that the antenna (64) is housed in the top (50) of the said gambling table, change desk or cash-in desk in order to define therein a checking area (53) for chips presented flat.

12. Gambling table, change desk or cash-in desk according to one of Claims 2 to 9, characterized in that the antenna (82) is arranged in a vertical channel (80) in order to define therein a checking area for chips presented vertically, the channel (80) emerging via a slot (76) made in the top (74) of the said gambling table, change desk or cash-in desk.

13. Gambling table, change desk or cash-in desk according to Claim 12, characterized in that the channel (80) emerges in a chip coffer or box (72) of the said gambling table, change desk or cash-in desk.

14. Gambling table, change desk or cash-in desk according to either of Claims 12 and 13, characterized in that the channel (80) carries an electromagnetic arrangement (96, 98, 100, 102) controlled by the said electronic processing means (16, 84) in order to control the movements of the chips in the channel (80) and especially to sort out the invalid chips.

15. Gambling table, change desk or cash-in desk according to one of the preceding claims, characterized in that the top (50, 74) of the said gambling table, change desk or cash-in desk bears a transparent window (58, 86) enabling the operator to see the signals and/or messages generated by the said communication means (18).

16. Gambling table, change desk or cash-in desk according to one of the preceding claims, characterized in that the said checking station includes clock and dating means (44).

17. Gambling table, change desk or cash-in desk according to one of the preceding claims, characterized in that the said checking station includes electromechanical sorting means controlled by the said electronic processing means in order to obtain a plurality of specified outputs depending on a parameter associated with the chip, for example its numerical value.

18. Gambling table, change desk or cash-in desk according to one of Claims 1 to 16, characterized in that the said checking station is used for management, customization, sorting or counting of gambling chips, automatic acquisition of the value of the chips checked, calculation of the accounting value of a batch of chips, or monitoring of the movements of gambling chips.

19. Gambling table, change desk or cash-in desk according to one of the preceding claims, characterized in that the said checking station includes a mechanical device enabling the chips to be inserted in loose form and to be mechanically handled so as to place the chips one by one, or as a group, in the checking area of the checking station.
